# FASCICULE DE BREVET EUROPEEN

(11) **EP 2 361 497 B1**
(45) Date de publication et mention de la délivrance du brevet: **15.07.2015**
(21) Numéro de dépôt: 11305208.8
(22) Date de dépôt: 25.02.2011
(51) Int. Cl.: A01J 25/11

(54) **Dispositif de bloc moule**
Formblockvorrichtung
Mould block device

(30) Priorité: 25.02.2010 FR 1051332
(43) Date de publication de la demande: 31.08.2011
(73) Titulaire: Secril, 01100 Martignat (FR)
(72) Inventeur: Vacher, Eric, 01430 Saint Martin du Fresne (FR)
(74) Mandataire: Rhein, Alain

(56) Documents cités:
- EP-A1- 0 364 048
- DE-A1- 19 503 058
- FR-A- 1 421 337
- FR-A1- 2 716 072

## Description

La présente invention a pour objet un dispositif de bloc moule, utilisé dans le domaine de la fabrication des fromages à pâte molle.

Ces dispositifs de bloc moule comportent des réceptacles ajourés, destinés à être remplis de caillé, afin d'en extraire le lactosérum par égouttage, et de lui donner une forme par moulage.

On connaît déjà de tels dispositifs, et notamment celui décrit dans le document FR 2 716 072 au nom de la présente Demanderesse.

Dans ce document est décrit un plateau en matière plastique du type polypropylène, comprenant une pluralité de moules accolés et soudés les uns aux autres pour former un ensemble plan de moules, entouré d'un cadre de maintien de forme rectangulaire dont les deux longerons renferment un insert métallique apte à assurer la rigidité du cadre, tandis que l'ensemble de moules comporte des tunnels, pratiqués parallèlement auxdits longerons, et destinés à loger chacun un insert métallique de renfort.

Un tel plateau est destiné à être superposé avec d'autres plateaux identiques en sorte de constituer une colonne pouvant être exposée à une température régulée, et permettre l'égouttage du caillé. La grande rigidité de ce plateau permet qu'il puisse être déplacé du poste de remplissage des moules au poste d'égouttage, sans risque de fléchissement du plateau et donc sans risque de perte de caillé.

Si ce plateau constitue un progrès par rapport aux autres dispositifs similaires, il n'en présente pas moins encore des inconvénients notamment de rigidité.

La présente invention a pour but de proposer un dispositif de blocs moules permettant de remédier à cet inconvénient, tout en présentant d'autres avantages.

Le dispositif de bloc moule pour l'égouttage du fromage selon l'invention se présente sous la forme d'un plateau en matière plastique, destiné à être superposé avec d'autres plateaux identiques en sorte de constituer une colonne, chacun desdits plateaux comprenant une pluralité de moules ajourés, accolés et soudés les uns aux autres pour former un ensemble plan de moules, entouré d'un cadre de maintien, et il se caractérise essentiellement en ce qu'il comporte en outre, une pluralité de traverses parallèles qui s'étendent perpendiculairement entre deux longerons dudit cadre, à un niveau inférieur de celui dans lequel s'étendent lesdits longerons, lesdites traverses étant renforcées longitudinalement chacune au moyen d'un insert métallique.

Les traverses équipées d'insert métallique procurent à chacun des plateaux une grande rigidité, ce qui d'une part permet de créer des plateaux plus grands que ceux existants, notamment aussi larges que longs, et d'autre part autorise des manipulations plus aisées.

Par ailleurs, les traverses étant à un niveau différent de celui du cadre, elles forment entretoises entre deux plateaux superposés, en sorte de favoriser une ventilation horizontale de tous les côtés de la colonne formée, en plus de la ventilation verticale.

Selon une autre caractéristique additionnelle du dispositif de bloc moule selon l'invention, les longerons du cadre, parallèles aux traverses, présentent en façade des ouvertures favorisant la ventilation.

Selon une autre caractéristique additionnelle du dispositif de bloc moule selon l'invention, les longerons du cadre, entre lesquels s'étendent les traverses, sont renforcés longitudinalement chacun au moyen d'un insert métallique.

Selon une autre caractéristique additionnelle du dispositif de bloc moule selon l'invention, chaque moule est constitué de deux parties, à savoir un fond et un corps tubulaire, ledit corps tubulaire étant assemblé audit fond par emboîtement, les corps tubulaires étant solidarisés pour former un ou plusieurs éléments, et tous les fonds étant solidaires pour former un seul élément s'étendant à l'intérieur du cadre au-dessus des traverses.

Selon une autre caractéristique additionnelle du dispositif de bloc moule selon l'invention, les corps tubulaires sont assemblés pour former des éléments constitués chacun d'un alignement de corps tubulaires, chacun des ces éléments étant assujetti aux fonds du plateau, perpendiculairement aux traverses.

Les avantages et les caractéristiques du dispositif de bloc moule selon l'invention, ressortiront plus clairement de la description qui suit et qui se rapporte au dessin annexé, lequel en représente un mode de réalisation non limitatif.

Dans le dessin annexé :
- la figure 1 représente une vue schématique en perspective d'un dispositif de bloc moule selon l'invention.
- la figure 2 représente une vue schématique partielle en perspective et en éclaté du même dispositif de bloc moule selon l'invention.
- la figure 3 représente une vue schématique en plan du même dispositif de bloc moule.
- la figure 4 représente une vue schématique en élévation du même dispositif de bloc moule.
- la figure 5 représente une vue schématique en élévation d'un autre côté du même dispositif de bloc moule.
- la figure 6 représente une vue schématique en élévation d'un ensemble de dispositifs de bloc moule.
- la figure 7 représente une vue schématique en élévation d'un autre côté du même ensemble de bloc moule.

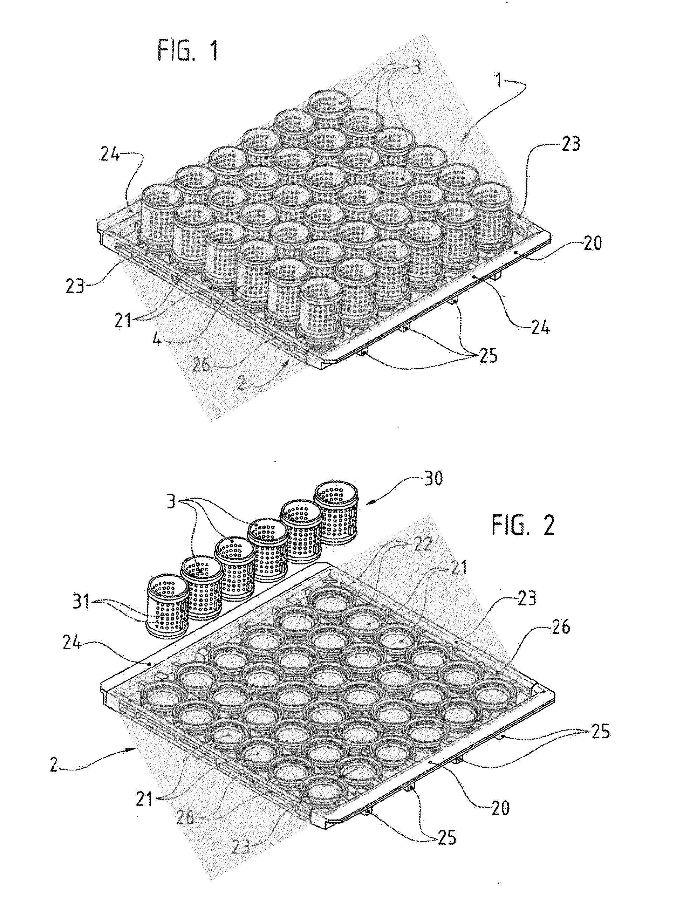

En référence aux figures 1 et 2, on peut voir qu'un bloc moule 1 selon l'invention, comporte d'une part un plateau 2 comprenant un cadre 20 entourant un ensemble de fonds 21, et d'autre part des corps tubulaires 3 destinés à être assemblés chacun à un fond 21 pour former un moule 4.

Dans le mode de réalisation représenté, le bloc moule 1 comporte six rangées de six moules 4.

Les corps tubulaires 3 sont assemblés les uns aux autres pour former des ensembles 30 de corps tubulaires 3, en l'occurrence, non limitativement, chacun des ensembles 30 comprend six corps tubulaires 3 alignés.

Les fonds 21 présentent des ouvertures 22, tandis que les corps tubulaires 3 comportent des perforations 31, en sorte de permettre l'évacuation du lactosérum.

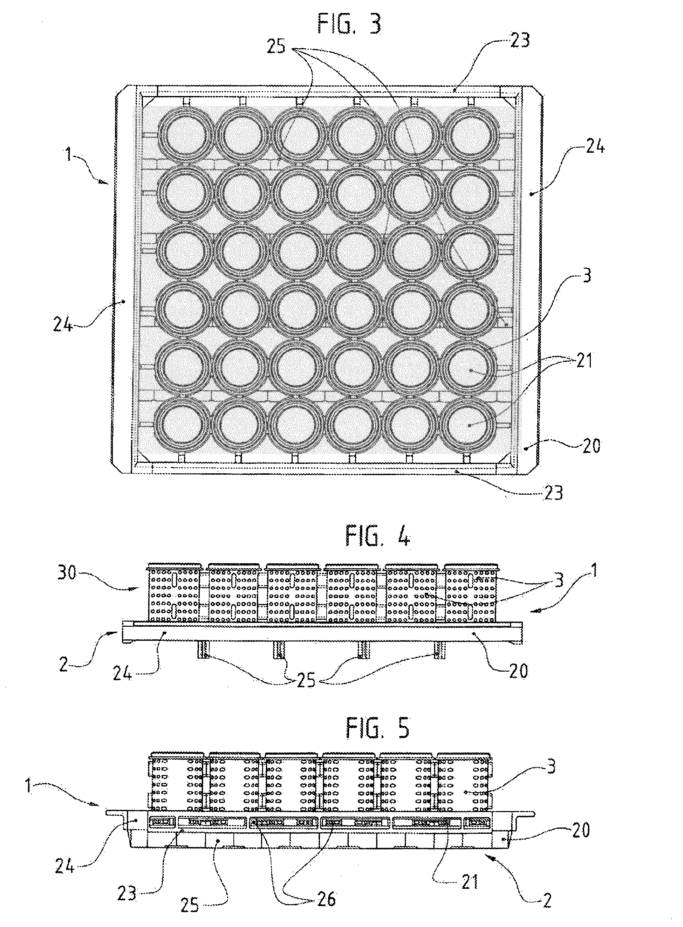

Comme on peut le voir de manière plus précise sur les figures 3, 4 et 5, le cadre 20 du plateau 2 est constitué des l'assemblage à angle droit de deux longerons parallèles 23 avec deux longerons parallèles 24, s'étendant dans un plan comprenant également les fonds 21, ainsi que de traverses 25, parallèles aux longerons 23, et s'étendant dans un autre plan, sous les longerons 23 et 24 et les fond 21. Les traverses 25 sont, dans ce mode de réalisation au nombre de quatre, et sont régulièrement espacées.

De manière avantageuse, les traverses 25 sont renforcées longitudinalement chacune au moyen d'un insert métallique, non visible.

On notera que les ensembles 30 de corps tubulaires 3, sont disposés perpendiculairement aux traverses 25, en sorte d'accroître la rigidité du bloc moule 1.

Par ailleurs, de manière préférentielle, les longerons 24 sont également renforcés longitudinalement au moyen d'un insert métallique, non visible.

On notera également que dans une variante, non représentée, le plateau 2 comprend sur une face un ensemble de fonds 21, et sur l'autre face un ensemble de fonds 21 disposés tête bêche par rapport à ceux de l'autre face, en sorte de permettre une réversibilité du plateau 2.

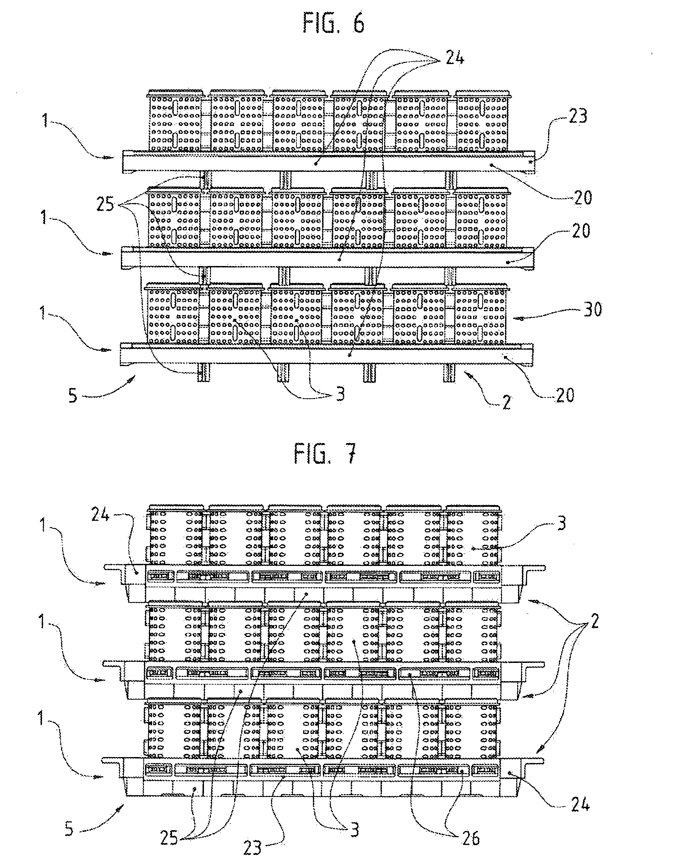

En référence maintenant aux figures 6 et 7, on peut voir un empilement 5 de blocs moules 1. On peut ainsi constater que dans une superposition de deux blocs moules 1, le bloc moule 1 supérieur repose sur le bloc moule 1 inférieur par l'intermédiaire de ses traverses 25, lesquelles viennent au contact des corps tubulaires 3 du bloc moule 1 inférieur.

En plus de conférer au plateau 2, et donc au bloc moule 1, une grande rigidité, les traverses 25 constituent des entretoises qui autorisent une ventilation dans le sens transversal, parallèlement aux traverses 25.

Afin de créer une ventilation transversale perpendiculairement aux traverses 25, les longerons 23 du plateau 22 comportent en façade des ouvertures 26, comme cela est plus particulièrement visibles sur les figures 1, 2, 5 et 7.

Outre la rigidité apportée par les traverses 25, un dispositif de bloc moule 1 selon l'invention, autorise non seulement une ventilation dans le sens vertical, en passant entre les moules 4, mais aussi transversalement.

## Revendications

1. Dispositif de bloc moule (1) pour l'égouttage du fromage se présentant sous la forme d'un plateau en matière plastique (2), destiné à être superposé avec d'autres plateaux (2) identiques en sorte de constituer une colonne (5), chacun desdits plateaux comprenant une pluralité de moules ajourés (4), accolés et soudés les uns aux autres pour former un ensemble plan de moules (4), entouré d'un cadre de maintien (20), **caractérisé en ce qu'**il comporte en outre, une pluralité de traverses parallèles (25) qui s'étendent perpendiculairement entre deux longerons (24) dudit cadre (20), à un niveau inférieur de celui dans lequel s'étendent lesdits longerons (24), lesdites traverses (25) étant renforcées longitudinalement chacune au moyen d'un insert métallique.

2. Dispositif de bloc moule (1) selon la revendication 1, **caractérisé en ce que** les longerons (23) du cadre (20), parallèles aux traverses (25), présentent en façade des ouvertures (26) favorisant la ventilation.

3. Dispositif de bloc moule (1) selon la revendication 1 ou la revendication 2, **caractérisé en ce que** les longerons (24) du cadre (30), entre lesquels s'étendent les traverses (25), sont renforcés longitudinalement chacun au moyen d'un insert métallique.

4. Dispositif de bloc moule (1) selon l'une quelconque des revendications précédentes, **caractérisé en ce que** chaque moule (4) est constitué de deux parties, à savoir un fond (21) et un corps tubulaire (3), ledit corps tubulaire (3) étant assemblé audit fond (21) par emboîtement, les corps tubulaires (3) étant solidarisés pour former un ou plusieurs éléments (30), et tous les fonds (21) étant solidaires pour former un seul élément s'étendant à l'intérieur du cadre (20) au-dessus des traverses (25).

5. Dispositif de bloc moule (1) selon la revendication 4, **caractérisé en ce que** les corps tubulaires (3) sont assemblés pour former des éléments constitués chacun d'un alignement (30) de corps tubulaires (3), chacun des ces éléments (30) étant assujetti aux fonds (21) du plateau (2), perpendiculairement aux traverses (25).

## Patentansprüche

1. Formblockvorrichtung (1) zum Abtropfen von Käse, die als eine Platte aus Kunststoff (2) ausgestaltet ist, welche dazu bestimmt ist, mit weiteren identischen Platten (2) aufeinander gestapelt zu werden, um so eine Säule (5) zu bilden, wobei jede der besagten Platten eine Mehrzahl von durchlochten Formen (4) umfasst, die zusammengefügt und aneinander geschweisst sind, um eine flache Formeneinheit (4) zu bilden, die von einem Halterahmen (20) umgeben ist, **dadurch gekennzeichnet, dass** sie außerdem eine Mehrzahl von parallelen Querträgern (25) umfasst, die sich senkrecht zwischen zwei Längsträgern (24) des besagten Rahmens (20) auf eine Hóhe erstrecken, die niedriger ist als diejenige, in der sich die besagten Längsträger (24) erstrecken, wobei die besagten Querträger (25) jeweils in Längsrichtung mittels eines Metalleinsatzes verstärkt sind.

2. Formblockvorrichtung (1) nach Anspruch 1, **dadurch gekennzeichnet, dass** die zu den Querträgern (25) parallel verlaufenden Längsträger (23) des Rahmens (20) in der Vorderseite Öffnungen (26) aufweisen, welche die Lüftung fördern.

3. Formblockvorrichtung (1) nach Anspruch 1 oder Anspruch 2, **dadurch gekennzeichnet, dass** die Längsträger (24) des Rahmens (30), zwischen denen sich die Querträger erstrecken (25), jeweils in Längsrichtung mittels eines Metalleinsatzes verstärkt sind.

4. Formblockvorrichtung (1) nach irgendeinem der vorhergehenden Ansprüche, **dadurch gekennzeichnet, dass** jede Form (4) aus zwei Teilen besteht, nämlich aus einem Boden (21) und einem rohrförmigen Körper (3), wobei der besagte rohrförmige Körper (3) durch Verschachtelung mit dem besagten Boden (21) zusammengefügt ist, wobei die rohrförmigen Körper (3) fest mit einander verbunden sind, um ein oder mehrere Elemente (30) zu bilden, und sämtliche Böden (21) fest miteinander verbunden sind, um ein einzelnes Element zu bilden, das sich innerhalb des Rahmens (20) oberhalb der Querträger (25) erstreckt.

5. Formblockvorrichtung (1) nach Anspruch 4, **dadurch gekennzeichnet, dass** die rohrförmigen Körper (3) zusammengefügt sind, um Elemente zu bilden, die jeweils aus einer Reihe (30) von rohrförmigen Körpern (3) bestehen, wobei jedes dieser Elemente (30) senkrecht zu den Querträgern (25) an den Böden (21) der Platte (2) befestigt sind.

## Claims

1. A mold block device (1) for draining the cheese, being in the form of a tray made of plastic (2), aimed at being superimposed with other identical trays (2), so as to form a column (5), each of said trays comprising a plurality of perforated molds (4), joined and welded to each other so as to form a planar mold assembly (4), surrounded by a holding frame (20), wherein it comprises in addition a plurality of parallel crossbeams (25) extending perpendicular between two longitudinal beams (24) of said frame (20) at a level lower than that in which said longitudinal beams extend (24), said crossbeams (25) being each reinforced longitudinally by means of a metal insert.

2. A mold block device (1) according to claim 1, wherein the longitudinal beams (23) of the frame (20) parallel to the crossbeams (25) have in the front openings (26) promoting the ventilation.

3. A mold block device (1) according to claim 1 or claim 2, wherein the longitudinal beams (24) of the frame (30), between which the crossbeams (25) extend, are each reinforced longitudinally by means of a metal insert.

4. A mold block device (1) according to any one of the preceding claims, wherein each mold (4) is comprised of two parts, namely a bottom (21) and a tubular body (3), said tubular body (3) being assembled to said bottom (21) by encasement, the tubular body (3) being made integral so as to form one or more elements (30), and all the bottoms (21) being made integral so as to form a single element extending inside the frame (20), above the crossbeams (25).

5. A mold block device (1) according to claim 4, wherein the tubular bodies (3) are assembled in order to form elements each comprised of an alignment (30) of tubular bodies (3), each of these elements (30) being fixed to the bottoms (21) of the tray (2), perpendicularly to the crossbeams (25).
